# EUROPÄISCHE PATENTANMELDUNG

(11) **EP 0 796 701 A1**
(43) Veröffentlichungstag der Anmeldung: **24.09.1997**
(21) Anmeldenummer: 97104502.6
(22) Anmeldetag: 17.03.1997
(51) Int. Cl.: B23Q 7/00, B23Q 1/03, B25B 1/24

(54) **Spannstock**

(30) Priorität: 21.03.1996 DE 19611171
(71) Anmelder: Handtmann A-Punkt Automation GmbH, 88255 Niederbiegen (DE)
(72) Erfinder: Arnold, Roland Dipl. Ing., D-88289 Waldburg (DE); Hofer, Dieter, D-88213 Ravensburg (DE)
(74) Vertreter: Engelhardt, Guido, Dipl.-Ing.

(57) **Zusammenfassung**

Bei einem Spannstock (1) mit zwei Spannbacken 11, 12), von denen der erste Spannbacken (11) mit einem Träger (13) für den zweiten Spannbacken (12) versehen und dieser in einer Platte (15) eingesetzt ist, die begrenzt verschiebbar auf dem Träger (13) gelagert und über eine überdrückbare Druckfeder (20) abgestützt ist, ist seitlich neben der Platte (15) auf einer oder beiden Längsseiten jeweils eine Auflageleiste (31) angeordnet, die über die Auflagefläche (15') der Platte (15) überstehen und in Abhängigkeit von der Betriebsstellung des Spannstockes (1) vertikal in einem Bereich über der Auflagefläche (15') der Platte (15) verstellbar sind.

Durch diese Ausgestaltung wird erreicht, daß beim Versetzen eines Spannstockes (1) die Oberfläche eines auf einer Arbeitsmaschine eingespannten Werkstückes (2) durch den Spannstock (1) nicht beschädigt wird, da bei einer Verstellbewegung keine Berührung zwischen dem Spannstock (1) und dem Werkstück (2) gegeben ist.

## Beschreibung

Die Erfindung bezieht sich auf einen Spannstock zur Halterung eines Werkstückes mit zwei relativ zueinander verstellbaren Spannbacken, von denen der erste Spannbacken mit einem Träger für den zweiten Spannbacken versehen ist und der zweite Spannbacken in einer Platte eingesetzt ist, die begrenzt verschiebbar auf dem Träger gelagert und über eine in Richtung des ersten Spannbackens wirkende mittels einer Servoeinrichtung überdrückbaren Druckfeder an diesem abgestützt und wobei der Träger mit einem Verstellglied, beispielsweise einem verfahrbaren Schlitten, wahlweise koppelbar ist.

Durch die DE-43 07 055 A1 ist ein Spannstock dieser Art, der sich in der Praxis bewährt hat, bekannt. Vielfach werden mehrere solcher Spannvorrichtungen bei Maschinen eingesetzt, auf denen profilartige Werkstücke großer Länge aufzuspannen sind und die mehrfach bearbeitet werden müssen. Oftmals sind daher einzelne Spannstöcke in Längsrichtung des Werkstückes zu versetzen, um an einer vorgegebenen Stelle eine Bearbeitung, ohne Beeinträchtigung durch den Spannstock, vornehmen zu können.

Da jedoch das Werkstück unmittelbar auf der mit T-Nuten zur Halterung des zweiten Spannbackens versehenen Platte aufliegt, kann z. B. die eloxierte Werkstück-Oberfläche durch Verschiebebewegungen mitunter beschädigt werden. Auf der Platte können sich nämlich bei der Bearbeitung anfallende Späne ablagern, durch die bei einer Relativverschiebung zwischen dem Spannstock und dem Werkstück dessen hochwertige Oberfläche verkratzt werden kann. Dabei kann das Werkstück derart beeinträchtigt werden, daß dieses nicht mehr zu verwenden ist und ersetzt werden muß.

Aufgabe der Erfindung ist es daher, den Spannstock der eingangs genannten Gattung in der Weise zu verbessern, daß mit Sicherheit auszuschließen ist, daß beim Versetzen eines Spannstockes die Oberfläche eines auf einer Arbeitsmaschine eingespannten Werkstückes durch den Spannstock oder durch auf diesen abgelagerte Verunreinigungen beschädigt wird. Der dazu erforderliche Bauaufwand soll gering gehalten werden, dennoch soll zuverlässig sichergestellt sein, daß bei einer Verstellbewegung des Spannstockes keine Berührung zwischen diesem und dem Werkstück gegeben ist.

Gemäß der Erfindung wird dies bei dem Spannstock der vorgenannten Art dadurch erreicht, daß seitlich neben der den zweiten Spannbacken tragenden Platte auf einer oder beiden Längsseiten parallel zu dieser jeweils eine Auflageleiste zur Abstützung des Werkstückes angeordnet ist, die über die Auflagefläche der Platte für den zweiten Spannbacken überstehen und in Abhängigkeit von der Betriebsstellung des Spannstockes vertikal in einem Bereich über der Auflagefläche der Platte verstellbar sind.

Zweckmäßig ist es hierbei, die Auflageleiste mittels an dieser befestigter abstehender Führungsbolzen in einem an dem verfahrbaren Schlitten angebrachten vorzugsweise gabelförmig ausgebildeten und mit Führungsbohrungen versehenen Träger höhenverstellbar zu halten und zur Höhenverstellung der Auflageleiste mindestens eine Steuerkurve und eine mit dieser zusammenwirkende Kurvenrolle vorzusehen, die wahlweise an der Auflageleiste und der Platte an den einander zugekehrten Seiten angebracht sind.

Nach einer bevorzugten Ausgestaltung sollte eine Auflageleiste mit zwei Steuerkurven versehen sein, die jeweils in eine an der Auflageleiste befestigte Schiene eingearbeitet sind, und die mit diesen zusammenwirkenden Kurvenrollen sollten mit der Platte fest verbunden sein, wobei die Steuerkurven vorzugsweise im Endbereich des Verstellweges jeweils einen der wählbaren Absenkung der Auflageleiste entsprechenden Höhenversatz aufweisen sollte.

Angebracht ist es des weiteren, die aus Kunststoff bestehenden Auflageleisten auswechselbar in einer L- oder U-förmig ausgebildeten Profilschiene einzusetzen, an der die in die Führungsbohrungen des Trägers eingreifenden Führungsbolzen befestigt sind.

Wird ein Spannstock gemäß der Erfindung ausgebildet, so liegt ein eingespanntes Werkstück nicht auf der den zweiten Spannbacken tragenden Platte auf, sondern auf einer oder zwei neben dieser angeordneten Auflageleisten, die jedoch bei einer seitlichen Verstellbewegung des Spannstockes gegenüber dem durch weitere Spannstöcke arretierten Werkstückes durch Öffnen eines Spannstockes selbsttätig abgesenkt werden. Der Spannstock kann somit, ohne daß dabei das Werkstück berührt wird, verstellt werden, Beschädigungen der Oberfläche des Werkstückes sind demnach zuverlässig ausgeschlossen. Der Bauaufwand, mit dem dies zu bewerkstelligen ist, ist gering, da lediglich höhenverstellbare Halteleisten vorzusehen sind, die bei der Öffnungsbewegung des Spannstockes mittels der zusammenwirkenden Steuerkurven und Kurvenrollen betätigt werden. Und da die Auflageflächen der Halteleisten sowohl bei der Aufnahme eines Werkstückes als auch bei den Verstellbewegungen des Spannstockes stets über der Oberfläche der Platte angeordnet sind, kommt das Werkstück nicht mit der Platte in Berührung. Ein seitlicher Versatz eines Spannstockes kann somit jederzeit vorgenommen werden, ohne daß zu befürchten ist, daß dadurch die Oberfläche des eingespannten Werkstückes beschädigt wird.

In der Zeichnung ist ein Ausführungsbeispiel eines gemäß der Erfindung ausgebildeten Spannstockes dargestellt, das nachfolgend im einzelnen erläutert ist. Hierbei zeigt:
- Figur 1: den an einen Schlitten als Verstellglied angekoppelten Spannstock in Vorderansicht und teilweise im Schnitt,
- Figur 2: drei nebeneinander angeordnete Spannstöcke nach Figur 1, in Seitenansicht
und
- Figuren 3 und 4: eine der bei dem Spannstock nach Figur 1 vorgesehene mit einer Kurvenrolle zusammenwirkenden Steuerkurve in zwei unterschiedlichen Betriebsstellungen und vergrößerten Darstellung.

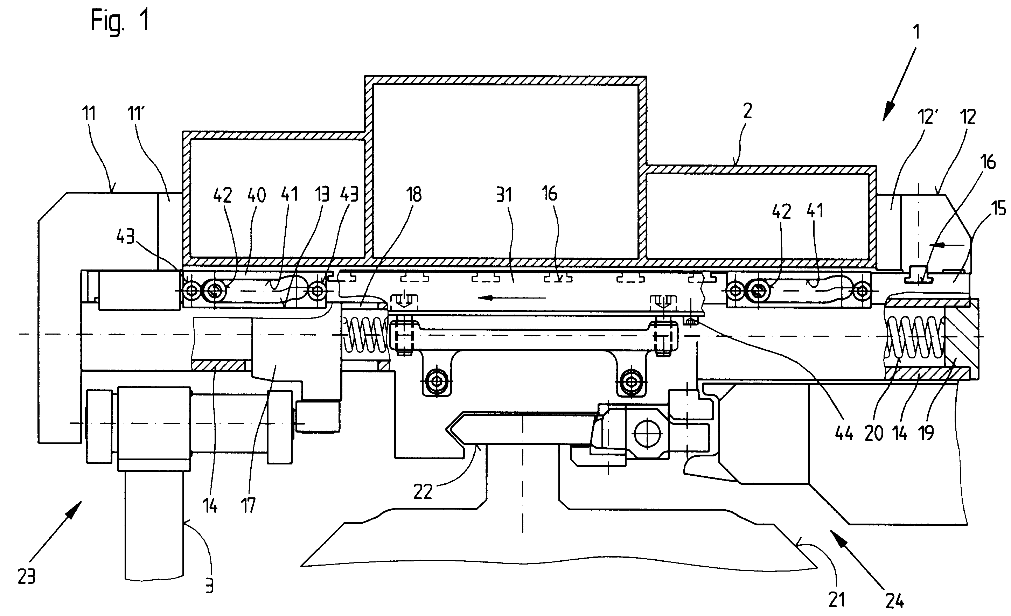

Der in Figur 1 dargestellte und mit 1 bezeichnete Spannstock dient zur Halterung eines Werkstückes 2 bei dessen Bearbeitung und besteht im wesentlichen aus einem ersten Spannbacken 11, einem an diesem befestigten Träger 13 sowie einem zweiten Spannbacken 12, der in Richtung des ersten Spannbacken 11 verstellbar ist. Dazu dient eine Druckfeder 20, die in einem den Träger 13 bildenen Rohrstück 14 eingesetzt, an diesem abgestützt ist und auf den zweiten Spannbacken 12 einwirkt. Zur Abstützung der Druckfeder 20 an dem Rohrstück 14 ist ein in dessen dem zweiten Spannbacken 12 zugekehrten Ende eingesetzter Stopfen 19 vorgesehen. Die Abstützung der Druckfeder 20 an dem zweiten Spannbacken 12 wird mit Hilfe eines Ansatzstückes 17 bewerkstelligt, das an einer Platte 15 als Zwischenglied angebracht ist, die den zweiten Spannbacken 12 trägt. Die Platte 15 ist dazu mit mit seitlichem Abstand zueinander angeordneten Nuten 16 ausgestattet, in die der zweite Spannbacken 12 je nach der Größe des einzuspannenden Werkstückes eingesetzt werden kann. Mittels einer den ersten Spannbacken 11 durchgreifenden, nicht dargestellten Schraube ist dieser mit dem Rohrstück 14 fest verbunden.

Das Ansatzstück 17 durchgreift das Rohrstück 14, in das dazu Längsschlitze 18 eingearbeitet sind. Die Spannkraft der Druckfeder 20 wird somit über das Ansatzstück 17 und die Platte 15 auf den zweiten Spannbacken 12, der wie auch der erste Spannbacken 11 mit auswechselbaren an das jeweils einzuspannende Werkstück angepaßte Einsätze 11' bzw. 12' versehen ist, übertragen. Das Werkstück 2 wird demnach durch die Kraft der Druckfeder 20 zwischen dem ersten und dem zweiten Spannbacken 11 bzw. 12 gehalten.

Zum Öffnen des Spannstockes 1 ist eine in einem Gestell 3 angeordnete Servoeinrichtung 23 vorgesehen, durch die das Ansatzstück 17 nach rechts verschoben und dadurch die Druckfeder 20 überdrückt wird. Der zweite Spannbacken 12 ist dadurch von dem Werkstück 2 abgehoben, so daß dieses dem Spannstock 1 entnommen oder dieser versetzt werden kann.

Der Spannstock 1 ist, um dessen Lage verändern zu können, mit einem Schlitten 21 als Verstellglied wahlweise koppelbar. Dazu sind zwei an dem Träger 13 angebrachte Klemmstücke vorgesehen, die mit einer auf dem Schlitten 21 befestigten Führungsschiene 22 koppelbar sind.

Zum Öffnen der selbsttätig schließenden Klemmverbindung zwischen dem Träger 13 des Spannstockes 1 und der Führungsschiene 22 dient wiederum eine Servorienrichtung 24, die aus einer Spannzange sowie einem in einen Zylinder eingesetzten und von einem Druckmedium beaufschlagbaren Verstellkolben besteht.

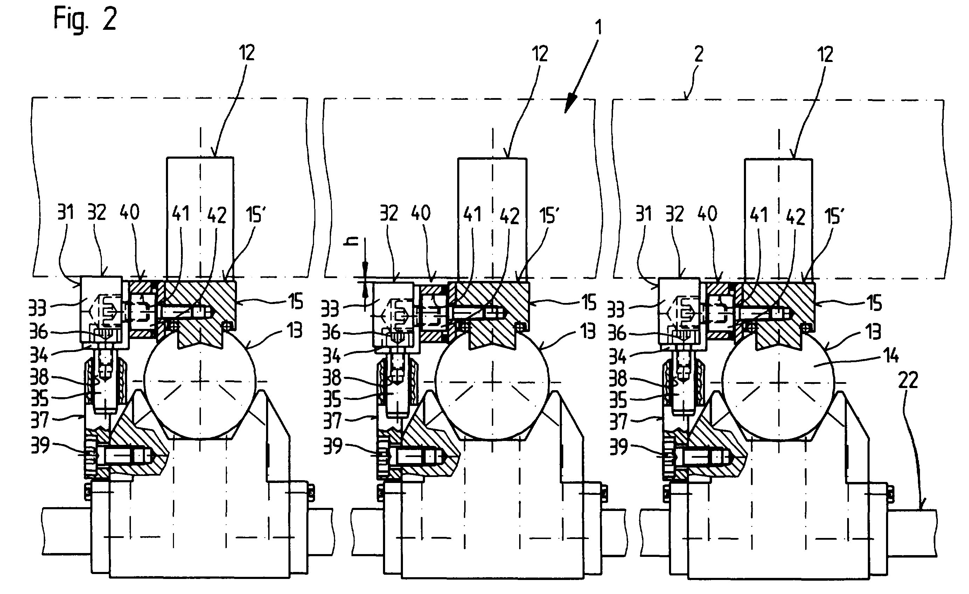

Das Werkstück 2 ist bei dessen Bearbeitung, wie dies der Figur 2 zu entnehmen ist, zumindest in drei nebeneinander angeordneten Spannstöcken 1 eingespannt. Oftmals muß jedoch, um an einer vorgegebenen Stelle eine Bearbeitung vornehmen zu können, einer der Spannstöcke 1 seitlich versetzt werden, so daß dieser zu öffnen und auf der Führungsschiene 22 zu verschieben ist, die beiden anderen Spannstöcke bleiben jedoch geschlossen. In Figur 2 ist der mittlere Spannstock 1 geöffnet dargestellt.

Damit bei der Verstellbewegung eines der Spannstöcke 1 das Werkstück 2 durch diesen nicht beschädigt wird, ist seitlich neben der Platte 15 eine Auflageleiste 31 angeordnet, auf deren Auflageflächen 32 das Werkstück 2 im eingespannten Zustand aufliegt. Beim Öffnen des Spannstockes 1 wird jedoch die Auflageleiste 31 selbsttätig abgesenkt, so daß z. B. der mittlere Spannstock 1, ohne das Werkstück 2 zu berühren, auf der Führungsschiene 22 verschoben werden kann.

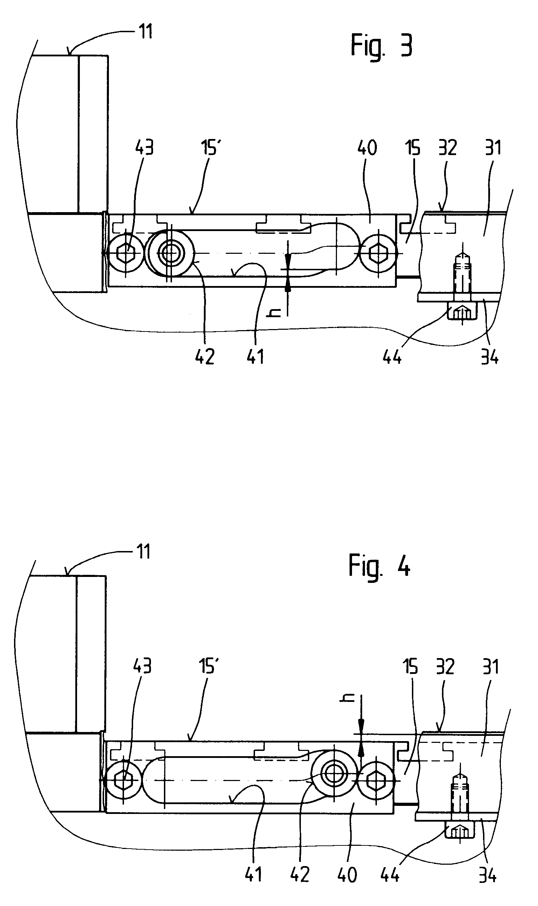

Um das selbsttätige Absenken der Auflageleiste 31 zu bewerkstelligen, ist diese höhenverstellbar in einem Träger 37 geführt und an der Auflageleiste 31 sind zwei jeweils mit einer Steuerkurve 41 versehene Schienen 40 mittels Schrauben 43 befestigt. In die Steuerkurven 41 greifen hierbei Kurvenrollen 42 ein, die fest mit der Platte 15 verbunden sind. Wird der Spannstock 1 geöffnet, so wird mit Hilfe der Servoeinrichtung 23 die Platte 15 verstellt, so daß die Kurvenrollen 42 gegenüber der Steuerkurve 41, die einen Höhenversatz h aufweist, vertikal verstellt wird. Dadurch wird, wie dies in Figur 4 gezeigt ist, die Auflageleiste 31 um den Höhenversatz h der Steuerkurve 41 abgesenkt, der Spannstock 1 kann, ohne daß das eingespannte Werkstück 2 beeinträchtigt wird, seitlich verschoben werden.

Die Auflageleiste 31 besteht hierbei aus einer Kunststoffleiste 33, die in einer L-förmigen Profilschiene 34 auswechselbar gehalten ist. Mittels Schrauben 44 ist die Kunststoffleiste 33 mit der Profilschiene 34 fest verbunden. Des weiteren sind an der Profilschiene 34 Führungsbolzen 35 mit Hilfe von Schrauben 36 angebracht und an dem Schlitten 21 ist der gabelförmig gestaltete Träger 37 befestigt, der mit vertikal gerichteten Führungsbohrungen 38 ausgestattet ist, in denen die Führungsbolzen 35 eingreifen. Die Auflageleiste 31 ist somit vertikal verstellbar in dem Träger 37, der durch Schrauben 39 an dem Schlitten 21 gehalten ist, abgestützt.

Der Höhenversatz h der Steuerkurve 41 ist derart gewählt, daß die Auflagefläche 32 der Auflageleiste 31 in beiden Betriebsstellungen stets über der Oberfläche 15' der Platte 15 angeordnet ist. Dadurch ist auch beim Einlegen des Werkstückes 2 in den Spannstock 1 gewährleistet, daß dieses nicht auf der Platte 15, sondern ausschließlich auf der Auflageleiste 31 aufliegt.

## Patentansprüche

1. Spannstock (1) zur Halterung eines Werkstückes (2) mit zwei relativ zueinander verstellbaren Spannbacken (11, 12), von denen der erste Spannbacken (11) mit einem Träger (13) für den zweiten Spannbacken (12) versehen ist und der zweite Spannbacken (12) in einer Platte (15) eingesetzt ist, die begrenzt verschiebbar auf dem Träger (13) gelagert und über eine in Richtung des ersten Spannbackens (11) wirkende mittels einer Servoeinrichtung (23) überdrückbaren Druckfeder (20) an diesem abgestützt ist und wobei der Träger (13) mit einem Verstellglied, beispielsweise einem verfahrbaren Schlitten (21), wahlweise koppelbar ist,
**dadurch gekennzeichnet,**
daß seitlich neben der den zweiten Spannbacken (12) tragenden Platte (15) auf einer oder beiden Längsseiten parallel zu dieser jeweils eine Auflageleiste (31) zur Abstützung des Werkstückes (2) angeordnet ist, die über die Auflagefläche (15') der Platte (15) für den zweiten Spannbacken (12) überstehen und in Abhängigkeit von der Betriebsstellung des Spannstockes (1) vertikal in einem Bereich über der Auflagefläche (15') der Platte (15) verstellbar sind.

2. Spannstock nach Anspruch 1,
**dadurch gekennzeichnet,**
daß die Auflageleiste (31) mittels an dieser befestigter abstehender Führungsbolzen (35) in einem an dem verfahrbaren Schlitten (21) angebrachten vorzugsweise gabelförmig ausgebildeten und mit Führungsbohrungen (38) versehenen Träger (37) höhenverstellbar gehalten ist.

3. Spannstock nach Anspruch 1 oder 2,
**dadurch gekennzeichnet,**
daß zur Höhenverstellung der Auflageleiste (31) mindestens eine Steuerkurve (41) und eine mit dieser zusammenwirkende Kurvenrolle (42) vorgesehen sind, die wahlweise an der Auflageleiste (31) und der Platte (15) an den einander zugekehrten Seiten angebracht sind.

4. Spannstock nach Anspruch 3,
**dadurch gekennzeichnet,**
daß eine Auflageleiste (31) mit zwei Steuerkurven (41) versehen ist, die jeweils in eine an der Auflageleiste (31) befestigte Schiene (40) eingearbeitet sind, und daß die mit diesen zusammenwirkenden Kurvenrollen (42) mit der Platte (15) fest verbunden sind.

5. Spannstock nach Anspruch 3 oder 4,
**dadurch gekennzeichnet,**
daß die Steuerkurven (41) vorzugsweise im Endbereich des Verstellweges jeweils einen der wählbaren Absenkung der Auflageleiste (31) entsprechenden Höhenversatz (h) aufweisen.

6. Spannstock nach einem oder mehreren der Ansprüche 1 bis 5,
**dadurch gekennzeichnet,**
daß die aus Kunststoff bestehenden Auflageleisten (31) auswechselbar in einer L- oder U-förmig ausgebildeten Profil-Schiene (34) eingesetzt sind, an der die in die Führungsbohrungen (35) des Trägers (37) eingreifenden Führungsbolzen (35) befestigt sind.
